# EUROPÄISCHE PATENTSCHRIFT

(11) **EP 2 536 648 B1**
(45) Veröffentlichungstag und Bekanntmachung des Hinweises auf die Patenterteilung: **05.03.2014**
(21) Anmeldenummer: 10800959.8
(22) Anmeldetag: 30.12.2010
(51) Int. Cl.: B65G 21/06, B65G 23/44, B65G 39/12

(54) **FÖRDEREINRICHTUNG**
CONVEYING DEVICE
DISPOSITIF DE TRANSPORT

(30) Priorität: 16.02.2010 DE 102010001969
(43) Veröffentlichungstag der Anmeldung: 26.12.2012
(73) Patentinhaber: Robert Bosch GmbH, 70442 Stuttgart (DE)
(72) Erfinder: GREIF, Tobias, 71522 Backnang (DE); LANG, Andreas, 70376 Stuttgart (DE)
(86) Internationale Anmeldenummer: PCT/EP2010/070917
(87) Internationale Veröffentlichungsnummer: WO 2011/101067

(56) Entgegenhaltungen:
- AU-A- 2 176 983
- DE-U1- 9 216 745
- FR-A1- 2 085 199
- US-A- 3 593 591
- US-A1- 2004 089 522

## Beschreibung

### Stand der Technik

Die vorliegende Erfindung betrifft eine Fördervorrichtung mit einer Transportgurteinheit zum Transport von Gütern gemäß dem Oberbegriff des Anspruchs 1.

Fördervorrichtungen des Standes der Technik, weisen im Wesentlichen einen geschlossenen Transportgurt auf, der zwischen zwei Umlenkrollen umläuft, von denen eine fest gelagert und antrieben wird und die andere in Längsrichtung zum Spannen und Justieren verstellbar gelagert ist. Hierbei erfolgt die Montage/Demontage und Justierung der Spannrolle bei einem erforderlichen Wechsel des Transportgurts im Allgemeinen werkzeuggebunden, was mit einem erheblichen Zeitaufwand verbunden ist.

Aus der US 3,593,591 A ist eine Fördervorrichtung mit den Merkmalen des Oberbegriffs des Anspruchs 1 bekannt.

### Offenbarung der Erfindung

Die erfindungsgemäße Fördervorrichtung mit den Merkmalen des Anspruchs 1 weist demgegenüber den Vorteil auf, dass sie ein Gestell und eine Transportgurteinheit umfasst, wobei die Transportgurteinheit einen ersten Seitenholm und einen zweiten Seitenholm, eine Antriebsrolle, die im ersten Seitenholm und im zweiten Seitenholm fest gelagert ist, und eine Spannrolle aufweist, die im ersten Seitenholm und im zweiten Seitenholm verstellbar gelagert ist. Ferner weist die Fördervorrichtung einen geschlossenen Transportgurt auf, der um die Antriebsrolle und die Spannrolle herum angeordnet ist, sowie eine Klemmvorrichtung mit einem ersten Klemmelement und einem zweiten Klemmelement auf, welche an der Spannrolle angeordnet ist, wobei die Spannrolle mittels des ersten Klemmelements und des zweiten Klemmelements an den Seitenholmen werkzeuglos einstellbar und fixierbar ist. Hierdurch wird eine Montage/Demontage der Spannrolle für einen erforderlichen Transportgurtwechsel, und das anschließende Spannen des Transportgurts sowie Justieren der Spannrolle ohne den Einsatz von speziellen Werkzeugen in wesentlich kürzerer Zeit ermöglicht. Ferner umfasst die Fördereinrichtung eine erste und zweite Verstelleinrichtung mit jeweils einer Gewindespindel mit einer Rändelmutter zur werkzeuglosen Verstellung des ersten und des zweiten Endbereichs der Spannrolle in Längsrichtung der Transportgurteinheit, wobei die Verstelleinrichtung im ersten und zweiten Seitenholm angeordnet ist. Hierdurch wird eine werkzeuglose exakte Feineinstellung bzw. Winkelausrichtung auf beiden Seiten der Achse der Spannrolle in Bezug auf den Transportgurt mit geringem manuellen Kraftaufwand ermöglicht. Ferner sind die im Inneren der Seitenholme angeordneten Bauteile der Verstelleinrichtung vor Verschmutzung geschützt und weisen eine hohe Dauerhaltbarkeit auf. Zyklische Wartungs- oder Reinigungsarbeiten sind hierfür nicht erforderlich.

Die Unteransprüche zeigen bevorzugte Weiterbildungen der Erfindung.

Vorzugsweise ist das erste Klemmelement in einen ersten Endbereich der Spannrolle und das zweite Klemmelement in einen zweiten Endbereich der Spannrolle werkzeuglos einschraubbar. Hierdurch wird eine kompakte Bauform mit einer minimalen Anzahl von Bauteilen erreicht. Weiterhin bevorzugt sind das erste Klemmelement und das zweite Klemmelement als Flügelmutter oder als Schnellverschlusshebel ausgebildet. Durch die Formgebung wird eine gute manuelle Bedienung der Klemmelemente ohne großen Kraftaufwand und mit einer ausreichenden Hebelwirkung zum Spannen und Fixieren der Spannrolle sichergestellt. Ferner sind die vorzugsweise aus Edelstahl gefertigten Flügelmuttern leicht zu reinigen.

Gemäß einer weiteren bevorzugten Ausgestaltung der Erfindung weisen die ersten und zweiten Endbereiche der Spannrolle jeweils zwei einander gegenüberliegende Abflachungen mit jeweils einem Absatz auf. Hierdurch wird eine exakte Führung im Inneren der Seitenholme bei einer Verschiebung der Spannrolle zum Spannen des Transportgurts in Längsrichtung gewährleistet. Außerdem wird durch die Absätze auf der Achse eine gute Anlagefläche für die axial einwirkende Klemmkraft in Bezug auf die jeweils gegenüberliegende Fläche der Seitenholme erreicht.

Weiterhin bevorzugt weisen die ersten und zweiten Klemmelemente einen jeweils einer Stirnseite der Spannrolle zugewandten Bundbereich auf, und klemmen die ersten und zweiten Seitenholme zwischen dem Bundbereich und dem Absatz der Endbereiche. Durch die Bundbereiche der Klemmelemente wird auf bauteilminimierte Weise eine homogene Übertragung der beim Einschrauben der Klemmelemente erzeugten Klemmkaft auf die Seitenholme und die Absätze der Spannrollenachse erreicht.

Gemäß einer weiteren bevorzugten Ausgestaltung der Erfindung ist die Transportgurteinheit werkzeuglos mit dem Gestell verbindbar und lösbar. Weiterhin bevorzugt sind Fixiervorrichtungen am ersten und zweiten Seitenholm vorgesehen, welche mit einem dritten und vierten Klemmelement mit dem Gestell werkzeuglos verbindbar sind. Hierdurch wird ein rascher und kostengünstiger Austausch der Transportgurteinheit ohne Werkzeugeinsatz ermöglicht. Darüber hinaus werden dadurch die Rüstzeiten bei einem Maschinenumbau wesentlich verkürzt.

Vorzugsweise umfasst die Fixiervorrichtung eine Passschraube mit einer Flügelmutter, welche in einer Aufnahme des Gestells werkzeuglos fixierbar und lösbar ist. Aufgrund der Ausbildung als Flügelmutter wird das Aufbringen der zur Befestigung der Transportgurteinheit am Gestell erforderlichen manuellen Kraft erleichtert und sichergestellt. Ferner weist die Fixiervorrichtung einen kompakten und kostengünstigen Aufbau mit einer minimalen Anzahl von Bauteilen auf. Weiter bevorzugt sind am Gestell mehrere Transportgurteinheiten platzierbar. Durch den modularen Aufbau wird ein Maschinenstillstand bei erforderlichen Reparatur- und/oder Wartungsarbeiten auf ein Minimum verkürzt. Durch den Einsatz von Flügelmuttern aus Edelstahl auch für die Befestigung der Transportgurteinheit am Gestell werden die Reinigung bzw. die hygienischen Eigenschaften der gesamten Maschineneinheit erheblich verbessert.

### Kurze Beschreibung der Zeichnungen

Nachfolgend wird ein Ausführungsbeispiel der Erfindung unter Bezugnahme auf die begleitende Zeichnung im Detail beschrieben. In der Zeichnung ist:
- Figur 1: eine perspektivische Darstellung einer Transportgurteinheit gemäß einem Ausführungsbeispiel der Erfindung,
- Figur 2: eine perspektivische Teilansicht der Transportgurteinheit,
- Figur 3: eine schematische Schnittdarstellung einer Spannrolle der Transportgurteinheit,
- Figur 4: eine perspektivische Darstellung der Fördereinrichtung mit einem Gestell,
- Figur 5: eine perspektivische Darstellung einer Fixiervorrichtung der Fördereinrichtung am Gestell, und
- Figur 6: eine alternative Ausführungsform der Fixiervorrichtung.

### Ausführungsform der Erfindung

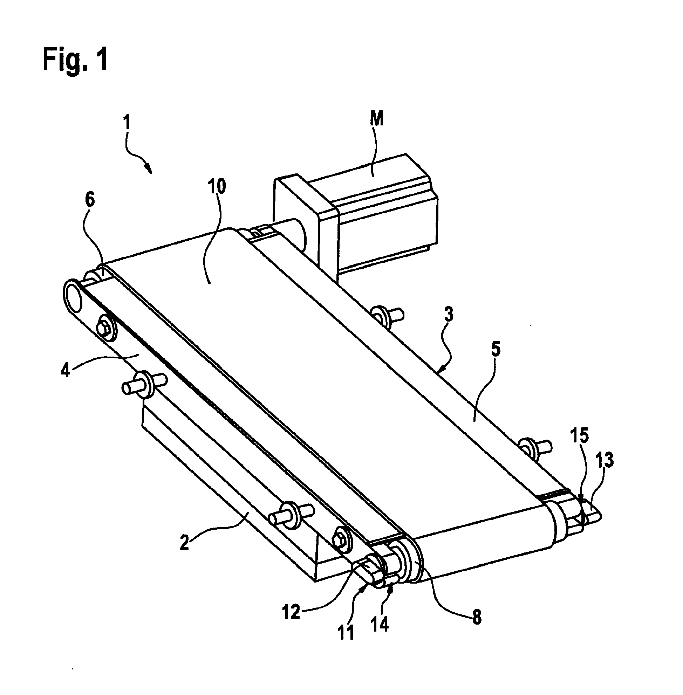

Nachfolgend wird unter Bezugnahme auf die Figuren 1 bis 6 eine Fördereinrichtung gemäß einem bevorzugten Ausführungsbeispiel der Erfindung im Detail beschrieben.

Wie aus der perspektivischen Darstellung des Ausführungsbeispiels der erfindungsgemäßen Fördereinrichtung 1 von Figur 1 ersichtlich, umfasst die Fördereinrichtung 1 ein Gestell 2, auf dem eine Transportgurteinheit 3 befestigt ist. Die Transportgurteinheit 3 weist einen ersten Seitenholm 4 und einen zweiten Seitenholm 5 sowie eine Antriebsrolle 6 auf, die in den ersten und zweiten Seitenholmen 4, 5 fest gelagert ist und von einem Motor M angetrieben wird. Die Transportgurteinheit 3 weist zudem eine Spannrolle 8 auf, die in den ersten und zweiten Seitenholmen 4, 5 verstellbar gelagert ist, sowie einen geschlossenen Transportgurt 10 auf, der um die Antriebsrolle 6 und die Spannrolle 8 herum angeordnet ist. Wie aus Figur 1 weiter ersichtlich, weist die Transportgurteinheit 3 eine Klemmvorrichtung 11 mit einem ersten Klemmelement 12 und einem zweiten Klemmelement 13 auf, welche in diesem Ausführungsbeispiel als Flügelmuttern ausgebildet sind. Alternativ können die Klemmelemente 12, 13 auch als Schnellverschlusshebel ausgebildet sein. Das erste Klemmelement 12 ist hierbei in einen ersten Endbereich 14 der Spannrolle 8 eingeschraubt und das zweite Klemmelement 13 ist in einen zweiten Endbereich 15 der Spannrolle 8 eingeschraubt. Die Klemmelemente 12, 13 können somit werkzeuglos von Hand in die Endbereiche 14, 15 der Spannrolle 8 eingeschraubt werden.

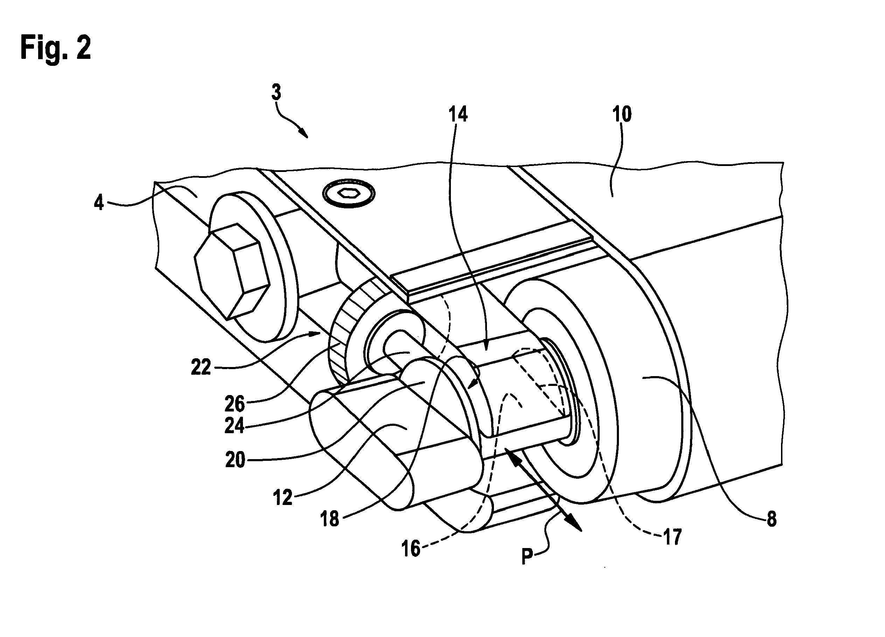

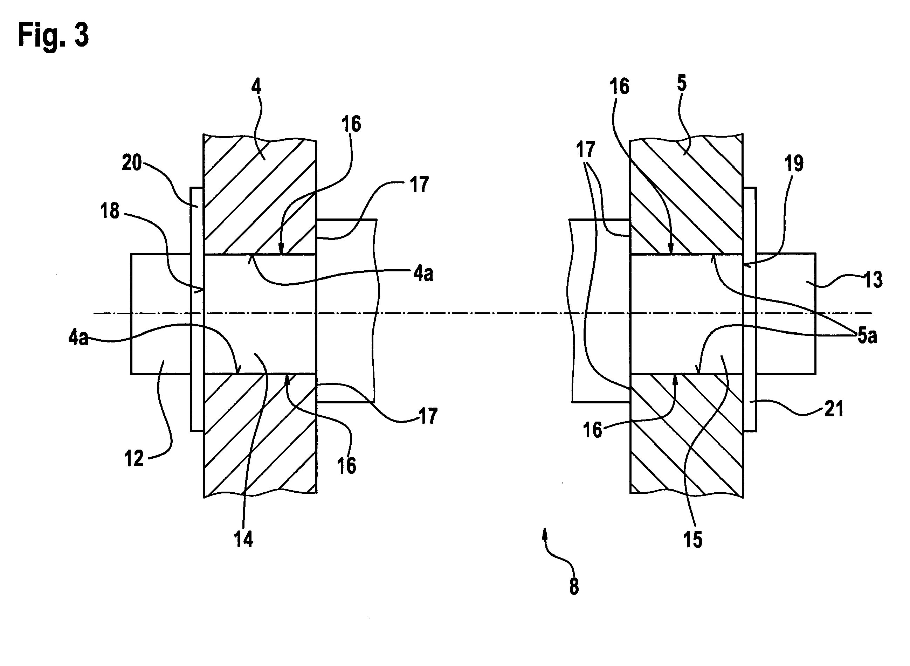

Wie aus der Schnittansicht der Spannrolle 8 von Figur 3 ersichtlich, weist der erste Endbereich 14 der Spannrolle 8 zwei einander gegenüberliegende Abflachungen 16 mit jeweils einem Absatz 17 auf, welche an Innenflächen 4a des ersten Seitenholms 4 bündig anliegen. In gleicher Weise ist der zweite Endbereich 15 der Spannrolle 8 ebenfalls mit zwei gegenüberliegenden Abflachungen 16 mit jeweils dem Absatz 17 ausgebildet, welche an Innenflächen 5a des zweiten Seitenholms 5 bündig anliegen. Wie aus Figur 2 ersichtlich, ist der Endbereich 14 der Spannrolle 8 aufgrund der Abflachungen 16 in Richtung eines Doppelpfeils P zum Spannen bzw. Entspannen des Transportgurts 10 innerhalb des ersten Seitenholms 4 verschiebbar. Gleichermaßen ist auch der Endbereich 15 der Spannrolle 8 innerhalb des zweiten Seitenholms 5 verschiebbar.

Die ersten und zweiten Klemmelemente 12 und 13 (Figur 3) weisen einen Bundbereich 20 bzw. 21 auf, welcher beim hier dargestellten eingeschraubten Zustand an einer Stirnseite 18 bzw. 19 der Spannrolle 8 anliegt. Wie aus Figur 3 ferner ersichtlich, klemmen die eingeschraubten ersten und zweiten Klemmelemente 12 und 13 die ersten und zweiten Seitenholme 4 und 5 zwischen ihrem Bundbereich 20 bzw. 21 und dem jeweiligen Absatz 17 der Endbereiche 14, 15 ein und fixieren dadurch die Spannrolle 8.

Wie aus Figur 2 weiter ersichtlich, weist die Transportgurteinheit 3 zudem eine erste Verstelleinrichtung 22 mit einer Gewindespindel 24 auf, die im ersten Seitenholm 4 angeordnet ist. Mittels einer am ersten Seitenholm 4 abgestützten bzw. geführten Rändelmutter 26 ist die Gewindespindel 24 in Richtungen des Doppelpfeils P werkzeuglos und rein manuell verstellbar. Durch entsprechendes Drehen der Rändelmutter 26 und Verschieben der am Endbereich 14 der Spannrolle 8 anliegenden Gewindespindel 24 ist eine Feineinstellung bzw. exakte Winkelausrichtung des auf der Seite des ersten Seitenholms 4 angeordneten Endbereichs 14 der Spannrolle 8 möglich. Es sei angemerkt, dass auf der gegenüberliegenden Seite im zweiten Seitenholm 5 eine identisch ausgebildete zweite Verstelleinrichtung mit einer Gewindespindel mit einer Rädelmutter zur Feineinstellung und Winkelausrichtung des Endbereichs 15 der Spannrolle 8 angeordnet ist, welche in der Darstellung von Figur 2 nicht sichtbar ist. Somit kann eine beidseitige exakte Einstellung und Ausrichtung der Spannrolle 8 nach einem Transportgurtwechsel werkzeuglos vorgenommen werden.

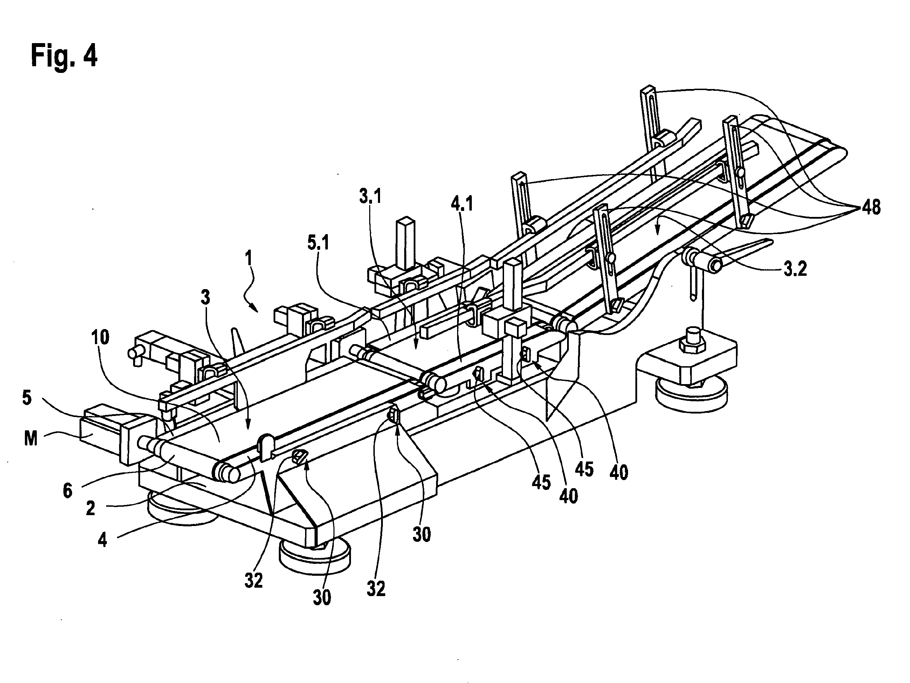

Figur 4 zeigt eine perspektivische Darstellung der Fördereinrichtung 1 mit einem Gestell 2, auf dem die oben beschriebene Transportgurteinrichtung 3 und zwei benachbart hintereinander angeordnete Transportgurteinrichtungen 3.1 und 3.2 gleicher Bauart befestigt sind. Zu besseren Übersichtlichkeit sind in Figur 4 nur bei der Transportgurteinrichtung 3 die wesentlichen sichtbaren Bauteile mit Bezugszeichen gekennzeichnet. Wie aus Figur 4 ersichtlich, ist der erste Seitenholm 4 der Transportgurteinrichtung 3 mittels zweier Fixiervorrichtungen 30 mit je einem dritten Klemmelement 32 am Gestell 2 befestigt. Obwohl in Figur 4 nicht sichtbar, ist der gegenüberliegende zweite Seitenholm 5 der Transportgurteinrichtung 3 mittels zweier identischer Fixiervorrichtungen und Klemmelemente gleichermaßen am Gestell 2 befestigt.

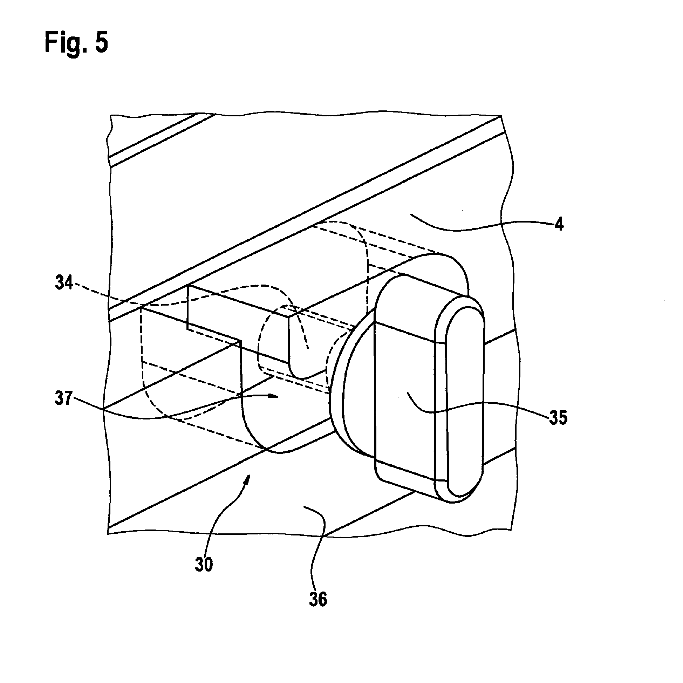

In Figur 5 ist der Aufbau der Fixiervorrichtung 30 perspektivisch dargestellt. Die Fixiervorrichtung 30 umfasst eine Passschraube 34 mit einer Flügelmutter 35. Die Passschraube 34 ist mit dem Seitenholm 4 fest verbunden und wird in einem Langlochbereich 37 einer Aufnahme 36 geführt und mit der Flügelmutter 35 fixiert. Die Aufnahme 36 weist hierbei den Langlochbereich 37 auf, der eine werkzeuglose und rein manuelle Justierung zwischen dem Gestell 2 und dem Seitenholm 4 in Längsrichtung der Transportgurteinheit 3 ermöglicht.

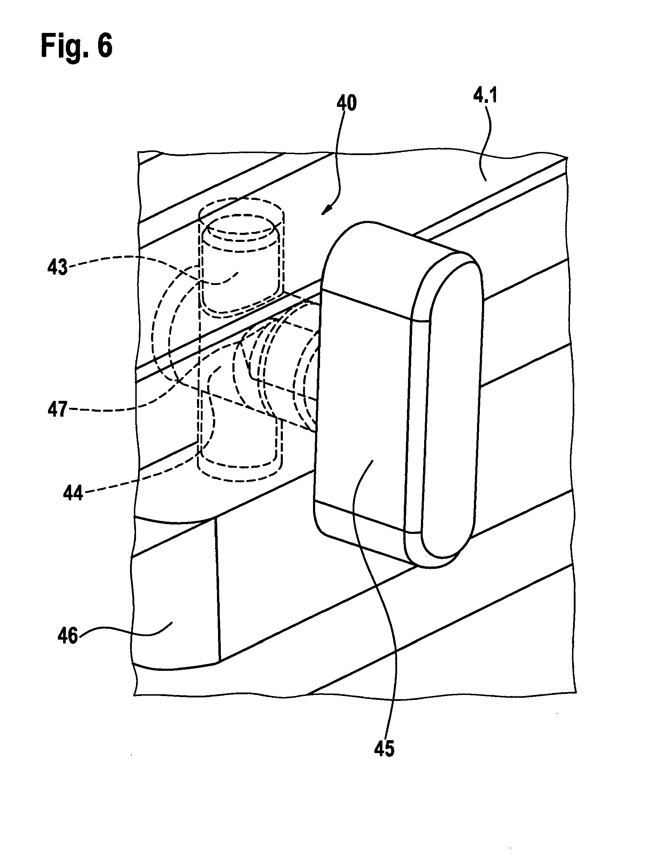

Wie aus Figur 4 weiter ersichtlich, ist ein erster Seitenholm 4.1 der Transportgurteinheit 3.1 mittels zweier Fixiervorrichtungen 40 mit je einem vierten Klemmelement 45 am Gestell 2 befestigt, von denen eine in Figur 6 detailliert dargestellt ist. Hierbei sei angemerkt, dass ein gegenüber angeordneter zweiter Seitenholm 5.1 der Transporteinrichtung 3.1 mittels identischen hier nicht sichtbaren Fixiervorrichtungen am Gestell 2 befestigt ist.

Die in Figur 6 gezeigte alternative Ausführungsform der Fixiervorrichtung 40 weist einen Ankerstift 43 mit einem Querstück 44 auf, welcher an einer Aufnahme 46 des Gestells 2 befestigt ist. In das Querstück 44 ist eine Flügelschraube 45 mit einer Spitze 47 eingeschraubt, welche den Ankerstift 43 samt Aufnahme 46 an einem ersten Seitenholm 4.1 fixiert.

Die Fixiervorrichtungen 30 und/oder 40 können ferner auch zur Befestigung von in Figur 4 dargestellten Führungsholmen 48 der Transportgurteinrichtung 3.2 Verwendung finden, die an deren Seitenholmen beidseitig befestigt sind.

Aufgrund der bei der erfindungsgemäßen Fördereinrichtung als Flügelmuttern oder Schnellverschlusshebel ausgebildeten Klemmelemente 12, 13 und Fixierungsvorrichtungen 30, 40 wird sowohl der Transportgurtwechsel der Transportgurteinheit als auch die Befestigung einer oder mehrerer Transportgurteinheiten an einem gemeinsamen Gestell 2 durchgehend werkzeuglos und in wesentlich kürzerer Zeit ermöglicht. Zudem werden dadurch die hygienischen Eigenschaften erheblich verbessert und die Reinigung der gesamten Maschinenanordnung wesentlich erleichtert.

## Patentansprüche

1. Fördereinrichtung, umfassend:
- ein Gestell (2), und eine Transportgurteinheit (3), wobei die Transportgurteinheit (3) aufweist:
- einen ersten Seitenholm (4) und einen zweiten Seitenholm (5),
- eine Antriebsrolle (6), die im ersten Seitenholm (4) und im zweiten Seitenholm (5) fest gelagert ist,
- eine Spannrolle (8), die im ersten Seitenholm (4) und im zweiten Seitenholm (5) verstellbar gelagert ist,
- einen geschlossenen Transportgurt (10), der um die Antriebsrolle (6) und die Spannrolle (8) herum angeordnet ist, und
- eine Klemmvorrichtung (11) mit einem ersten Klemmelement (12) und einem zweiten Klemmelement (13), welche an der Spannrolle (8) angeordnet ist,
**dadurch gekennzeichnet, dass**
- die Spannrolle (8) mittels des ersten Klemmelements (12) und des zweiten Klemmelements (13) an den Seitenholmen (4, 5) werkzeuglos einstellbar und fixierbar ist, und
- die Fördereinrichtung ferner eine erste und zweite Verstelleinrichtung (22) mit jeweils einer Gewindespindel (24) mit einer Rändelmutter (26) zur werkzeuglosen Verstellung des ersten und des zweiten Endbereichs (14, 15) der Spannrolle (8) in Längsrichtung der Transportgurteinheit (3) umfasst, wobei die Verstelleinrichtung (22) im ersten und zweiten Seitenholm (4, 5) angeordnet ist.

2. Fördereinrichtung nach Anspruch 1, **dadurch gekennzeichnet, dass** das erste Klemmelement (12) in einen ersten Endbereich (14) der Spannrolle (8) und das zweite Klemmelement (13) in einen zweiten Endbereich (15) der Spannrolle (8) werkzeuglos einschraubbar ist.

3. Fördereinrichtung nach Anspruch 1 oder 2, **dadurch gekennzeichnet, dass** das erste Klemmelement (12) und das zweite Klemmelement (13) als Flügelmutter oder als Schnellverschlusshebel ausgebildet sind.

4. Fördereinrichtung nach einem der Ansprüche 2 oder 3, **dadurch gekennzeichnet, dass** die ersten und zweiten Endbereiche (14, 15) der Spannrolle (8) jeweils zwei einander gegenüberliegende Abflachungen (16) mit jeweils einem Absatz (17) aufweisen.

5. Fördereinrichtung nach Anspruch 4, **dadurch gekennzeichnet, dass** die ersten und zweiten Klemmelemente (12, 13) einen jeweils einer Stirnseite (18, 19) der Spannrolle (8) zugewandten Bundbereich (20, 21) aufweisen und die ersten und zweiten Seitenholme (4, 5) zwischen dem Bundbereich (20, 21) und dem Absatz (17) der Endbereiche (14, 15) klemmen.

6. Fördereinrichtung nach einem der vorhergehenden Ansprüche, **dadurch gekennzeichnet, dass** die Transportgurteinheit (3) werkzeuglos mit dem Gestell (2) verbindbar und lösbar ist.

7. Fördereinrichtung nach Anspruch 6, **dadurch gekennzeichnet, dass** am ersten und zweiten Seitenholm (4, 5) Fixiervorrichtungen (30) vorgesehen sind, welche mittels einem dritten und vierten Klemmelement (32) mit dem Gestell (2) werkzeuglos verbindbar sind.

8. Fördereinrichtung nach Anspruch 7, **dadurch gekennzeichnet, dass** die Fixiervorrichtung (30) eine Passschraube (34) mit einer Flügelmutter (35) umfasst, welche in einer Aufnahme (36) des Gestells (2) werkzeuglos fixierbar und lösbar ist.

9. Fördereinrichtung nach einem der vorhergehenden Ansprüche, **dadurch gekennzeichnet, dass** am Gestell (2) mehrere Transportgurteinheiten (3) platzierbar sind.

## Claims

1. Conveying apparatus comprising:
- a framework (2) and a transporting-belt unit (3),
wherein the transporting-belt unit (3) has:
- a first side member (4) and a second side member (5),
- a drive roller (6), which is mounted in a fixed manner in the first side member (4) and in the second side member (5),
- a tensioning roller (8), which is mounted in an adjustable manner in the first side member (4) and in the second side member (5),
- a continuous transporting belt (10), which is arranged around the drive roller (6) and the tensioning roller (8), and
- a clamping device (11), which has a first clamping element (12) and a second clamping element (13) and is arranged on the tensioning roller (8),
**characterized in that**
- the tensioning roller (8) can be adjusted, and fixed, in a tool-free manner on the side members (4, 5) by means of the first clamping element (12) and of the second clamping element (13), and
- the conveying apparatus also comprises a first and second adjusting means (22) with in each case a threaded spindle (24) with a knurled nut (26) for adjusting the first and the second end regions (14, 15) of the tensioning roller (8) in a tool-free manner in the longitudinal direction of the transporting-belt unit (3), wherein the adjusting means (22) is arranged in the first and second side members (4, 5).

2. Conveying apparatus according to Claim 1, **characterized in that** the first clamping element (12) can be screwed in a tool-free manner into a first end region (14) of the tensioning roller (8), and the second clamping element (13) can be screwed in a tool-free manner into a second end region (15) of the tensioning roller (8).

3. Conveying apparatus according to Claim 1 or 2, **characterized in that** the first clamping element (12) and the second clamping element (13) are designed in the form of a wing nut or of a quick-closure lever.

4. Conveying apparatus according to either of Claims 2 and 3, **characterized in that** the first and second end regions (14, 15) of the tensioning roller (8) each have two oppositely located flattened portions (16) each with a shoulder (17).

5. Conveying apparatus according to Claim 4, **characterized in that** the first and second clamping elements (12, 13) have a collar region (20, 21), directed towards in each case one end side (18, 19) of the tensioning roller (8), and clamp the first and second side members (4, 5) between the collar region (20, 21) and the shoulder (17) of the end regions (14, 15).

6. Conveying apparatus according to one of the preceding claims, **characterized in that** the transporting-belt unit (3) can be connected to the framework (2), and released therefrom, in a tool-free manner.

7. Conveying apparatus according to Claim 6, **characterized by** the provision, on the first and second side members (4, 5), of fixing devices (30), which can be connected to the framework (2) in a tool-free manner by means of a third and fourth clamping element (32).

8. Conveying apparatus according to Claim 7, **characterized in that** the fixing device (30) comprises a fitting screw (34) with a wing nut (35), which can be fixed in a mount (36) of the framework (2), and released therefrom, in a tool-free manner.

9. Conveying apparatus according to one of the preceding claims, **characterized in that** a plurality of transporting-belt units (3) can be placed on the framework (2).

## Revendications

1. Dispositif de transport comprenant :
- un châssis (2), et une unité de courroie transporteuse (3), l'unité de courroie transporteuse (3) présentant :
- un premier longeron latéral (4) et un deuxième longeron latéral (5),
- un rouleau d'entraînement (6) qui est monté fixement dans le premier longeron latéral (4) et dans le deuxième longeron latéral (5),
- un rouleau de tensionnement (8) qui est monté de manière réglable dans le premier longeron latéral (4) et dans le deuxième longeron latéral (5),
- une courroie transporteuse fermée (10) qui est disposée autour du rouleau d'entraînement (6) et du rouleau de tensionnement (8), et
- un dispositif de serrage (11) avec un premier élément de serrage (12) et un deuxième élément de serrage (13), qui est disposé sur le rouleau de tensionnement (8),
**caractérisé en ce que**
- le rouleau de tensionnement (8) peut être ajusté et fixé sans outil au moyen du premier élément de serrage (12) et du deuxième élément de serrage (13) sur les longerons latéraux (4, 5), et
- le dispositif de transport comprend en outre un premier et un deuxième dispositif de réglage (22) comprenant à chaque fois une broche filetée (24) avec un écrou moleté (26) pour le réglage sans outil de la première et de la deuxième région d'extrémité (14, 15) du rouleau de tensionnement (8) dans la direction longitudinale de l'unité de courroie transporteuse (3), le dispositif de réglage (22) étant disposé dans le premier et le deuxième longeron latéral (4, 5).

2. Dispositif de transport selon la revendication 1, **caractérisé en ce que** le premier élément de serrage (12) peut être vissé sans outil dans une première région d'extrémité (14) du rouleau de tensionnement (8) et le deuxième élément de serrage (13) peut être vissé sans outil dans une deuxième région d'extrémité (15) du rouleau de tensionnement (8).

3. Dispositif de transport selon la revendication 1 ou 2, **caractérisé en ce que** le premier élément de serrage (12) et le deuxième élément de serrage (13) sont réalisés sous forme d'écrous à oreilles ou sous forme de leviers à fermeture rapide.

4. Dispositif de transport selon l'une quelconque des revendications 2 ou 3, **caractérisé en ce que** les première et deuxième régions d'extrémité (14, 15) du rouleau de tensionnement (8) présentent chacune deux méplats (16) mutuellement opposés ayant chacun un gradin (17).

5. Dispositif de transport selon la revendication 4, **caractérisé en ce que** les premier et deuxième éléments de serrage (12, 13) présentent une région d'épaulement (20, 21) tournée à chaque fois vers un côté frontal (18, 19) du rouleau de tensionnement (8) et serrent les premier et deuxième longerons latéraux (4, 5) entre la région d'épaulement (20, 21) et le gradin (17) des régions d'extrémité (14, 15).

6. Dispositif de transport selon l'une quelconque des revendications précédentes, **caractérisé en ce que** l'unité de courroie transporteuse (3) peut être connectée sans outil au châssis et déconnectée sans outil de celui-ci.

7. Dispositif de transport selon la revendication 6, **caractérisé en ce que** des dispositifs de fixation (30) sont prévus sur le premier et le deuxième longeron latéral (4, 5), lesquels peuvent être connectés sans outil au châssis (2) au moyen d'un troisième et d'un quatrième élément de serrage (32).

8. Dispositif de transport selon la revendication 7, **caractérisé en ce que** le dispositif de fixation (30) comprend une vis d'ajustement (34) avec un écrou à oreilles (35), qui peut être fixée et desserrée sans outil dans un logement (36) du châssis (2).

9. Dispositif de transport selon l'une quelconque des revendications précédentes, **caractérisé en ce que** plusieurs unités de courroie transporteuse (3) peuvent être placées sur le châssis (2).
